# FASCICULE DE BREVET EUROPEEN

(11) **EP 0 908 293 B1**
(45) Date de publication et mention de la délivrance du brevet: **13.11.2002**
(21) Numéro de dépôt: 98420175.6
(22) Date de dépôt: 07.10.1998
(51) Int. Cl.: B29C 65/02, B29C 65/08, B31B 41/00, B31B 19/84, A47L 9/14

(54) **Procédé d'assemblage sur un tambour d'une pièce plastique rigide avec une feuille souple**
Verfahren zum Verbinden eines festen Kunststoffteiles mit einem flexiblen Film auf eine Walze
Process for joining a rigid plastics piece with a flexible film on a drum

(30) Priorité: 07.10.1997 FR 9712729
(43) Date de publication de la demande: 14.04.1999
(73) Titulaire: SEB S.A., 69130 Ecully (FR)
(72) Inventeur: Hurkams, Robert, 78160 Marly le Roi (FR); Fleurier, Vincent, 27200 Vernon (FR); Verdun, Philippe, 13320 Bouc Bel Air (FR)

(56) Documents cités:
- EP-A- 0 326 358
- DE-A- 4 410 909
- FR-A- 1 381 805
- FR-A- 2 239 330
- GB-A- 2 053 793
- US-A- 2 867 183
- US-A- 3 323 274
- US-A- 3 909 340
- US-A- 4 690 722
- US-A- 5 393 360
- PATENT ABSTRACTS OF JAPAN vol. 018, no. 367 (C-1223), 11 juillet 1994 -& JP 06 098941 A (NAKATA KOGYO KK), 12 avril 1994

## Description

La présente invention se rapporte au domaine de l'assemblage d'au moins deux pièces par des procédés de type soudage ou collage. Plus particulièrement, la présente invention traite de l'assemblage d'une pièce rigide ou semi-rigide sur un matériau souple.

On connaît de tels assemblages utilisant un procédé discontinu et linéaire où les pièces rigides sont amenées par un robot ou manuellement au contact de la structure souple, généralement de façon coplanaire, assemblées selon le moyen approprié puis évacuées. Ce procédé peut être un procédé continu avec plusieurs postes de travail. Cependant, compte tenu des opérations à effectuer, les cadences rencontrées dans de tels procédés linéaires restent limitées.

Le document Patent abstract of Japan n° 06098941 montre un procédé d'assemblage d'aimants avec un substrat. Les aimants sont maintenus dans des logements à la périphérie d'un tambour rotatif d'assemblage jusqu'au point de contact avec le substrat.

Il est également connu, par le document US 5 393 360, un procédé d'assemblage de pièces rendues élastiques par l'adjonction de bandes élastiques, à un film souple, par ultrasons. Les pièces sont situées sur un mandrin, le mandrin étant situé de façon radiale à un tambour mis en rotation

Un des objets de la présente invention consiste à utiliser un procédé d'assemblage par rotation d'un tambour supportant les pièces à assembler, l'une des pièces étant une pièce rigide ou semi-rigide, l'autre étant constituée par au moins une structure souple, le procédé par rotation étant connu pour présenter des cadences supérieures aux cadences d'un procédé linéaire.

Un autre objet de la présente invention est de réaliser une ou plusieurs découpes de la ou des structures souples sur le même tambour d'assemblage des pièces, et en particulier lors de l'assemblage des pièces.

Un autre objet de la présente invention est de réaliser les étapes essentielles de la fabrication d'un sac comportant une pièce rigide sur un seul tambour. Des problèmes de synchronisation peuvent en effet apparaître lorsque plusieurs tambours sont utilisés, lorsque leurs diamètres respectifs ne sont pas rigoureusement égaux. Par ailleurs, les risques de pliage ou d'extension de la structure souple pendant le transfert entre les deux tambours, conduisant au rebut du sac fabriqué sont, par la présente invention, fortement diminués.

Un autre objet de la présente invention vise à réaliser un filtre et un sac d'aspirateur comportant une pièce rigide de connexion ou de renfort mécanique, de façon reproductible et économique, à l'aide d'une structure simple, à une cadence élevée.

La présente invention est atteinte à l'aide d'un procédé d'assemblage d'une pièce rigide ou semi-rigide sur au moins une structure souple, les éléments à assembler étant entraînés sur la surface périphérique d'un tambour où ils sont assemblés, caractérisé en ce que la face frontale d'assemblage de la pièce rigide ou semi-rigide correspond à la surface générée par l'intersection entre d'une part la surface périphérique du tambour et d'autre part une forme frontale protubérante de la pièce rigide ou semi-rigide, et en ce que ladite pièce est disposée dans un logement ménagé par un évidement partiel de la surface périphérique du tambour.

Cette conception permet à la pièce de présenter une face d'assemblage épousant le rayon de courbure du tambour d'assemblage. Ainsi, en disposant un moyen d'assemblage de manière radiale au tambour, la pièce rigide reste continuellement tangentielle à ce moyen d'assemblage. Ceci permet un assemblage uniforme de la pièce rigide, sans déformation de celle-ci, évitant ainsi de fragiliser la liaison entre la pièce rigide et la structure souple. Cette notion est très importante lorsqu'il est souhaité une parfaite étanchéité au niveau de cette liaison.

Avantageusement, la face frontale d'assemblage de la pièce rigide ou semi-rigide correspond à la surface générée par l'intersection entre d'une part la surface périphérique du tambour et d'autre part la forme frontale protubérante de la pièce rigide ou semi-rigide, selon un axe radial du tambour. Cette configuration permet d'agencer, une fois la pièce assemblée, une pièce annexe à la pièce rigide perpendiculairement à celle-ci en gardant les propriétés géométriques volumiques de la pièce rigide, en intersection avec la surface cylindrique.

Par ailleurs, dans la mesure où le procédé est utilisé pour la réalisation d'un support de sac, ledit sac pouvant contenir des objets dont la masse totale est de plusieurs kilos, cette liaison doit être la plus résistance possible, vis-à-vis du type d'assemblage utilisé. En assurant l'uniformité de l'assemblage, sa résistance mécanique est renforcée, d'autant plus que la pièce n'est pas déformée ce qui évite des zones de fragilisation lorsque la pièce reprend sa position initiale.

De plus, le positionnement des pièces rigides dans des évidements du tambour d'assemblage, la structure souple permettant de maintenir la pièce lors de la rotation du tambour, permet de réduire les coûts pour réaliser cette fonction en simplifiant le montage tout en gardant les propriétés recherchées quant à l'assemblage réalisé.

Selon l'invention, les éléments destinés à être assemblés sont entraînés et assemblés lors d'une rotation continue du tambour d'assemblage, réduisant ainsi les coûts de fabrication par augmentation de la cadence de production.

Dans une variante de la présente invention, le procédé d'assemblage comporte d'autres opérations que l'opération d'assemblage, réalisées sur le tambour où a lieu l'assemblage.

Avantageusement, le tambour d'assemblage comporte aussi des moyens de découpe de la structure souple ou des structures souples.

Selon un mode particulier de réalisation de l'invention, la pièce rigide comportant une ouverture, lors de l'opération d'assemblage, une découpe de la structure souple ou des structures souples est réalisée à travers l'ouverture de la pièce rigide ou semi-rigide.

Ces trois dernières variantes permettent de regrouper différentes étapes de fabrication d'un produit sur un seul tambour d'assemblage, ce qui permet de réduire les frais d'outillage et d'éviter des problèmes de synchronisme lorsque plusieurs tambours sont utilisés.

Selon un mode particulier de la présente invention, le procédé d'assemblage est un procédé de soudage par ultrasons. Ce procédé se prête bien à un assemblage rapide, cadencé et définitif sans temps mort ni attente.

Selon ce dernier mode de réalisation, le contour de la pièce rigide ou semi-rigide porte des stries afin de réaliser des vecteurs d'énergie pour l'opération d'assemblage par ultrasons. Ces vecteurs d'énergie assurent la fusion locale du matériau et garantissent donc une homogénéité de l'assemblage.

Selon une variante de réalisation, le procédé d'assemblage comporte plusieurs étapes de fabrication, parmi lesquelles les séquences suivantes:
- assemblage d'au moins une feuille souple à une pièce rigide ou semi-rigide, comportant une ouverture,
- découpe d'au moins une structure souple à travers l'ouverture de la pièce rigide ou semi-rigide,
- assemblage d'au moins une autre structure souple sur la ou les précédente(s) avec découpage de ces structures selon une forme choisie, de manière à réaliser un sac souple comportant une pièce rigide ainsi qu'un orifice de liaison entre l'intérieur du sac et l'extérieur, lesdites séquences étant caractérisées par le fait qu'elles sont réalisées sur la face courbe d'un unique tambour mis en rotation, la face d'assemblage de la pièce rigide ou semi-rigide présentant un bord frontal dont le contour correspond à la surface générée par l'intersection entre la périphérie d'un cylindre et une forme creuse orientée selon un axe sécant à la surface périphérique du cylindre.

Ce dernier mode de réalisation de la présente invention permet l'élaboration d'un sac d'aspirateur comportant un dispositif de connexion rigide ou semi-rigide doté d'une ouverture et d'une perforation dans la structure souple sous-jacente à l'ouverture de la pièce de connexion. Cette disposition permet de relier l'intérieur du sac à l'extérieur dans un environnement rigide, pour le passage, par exemple, d'un conduit d'aspirateur, la pièce rigide permettant le maintien du sac à l'intérieur du bâti de l'aspirateur.

La présente invention sera mieux comprise à l'aide des dessins suivants, donnés à titre purement indicatif et illustrant un mode particulier de réalisation de l'invention où :
- la figure 1 représente la forme générale de la face d'assemblage de la pièce rigide ou semi-rigide, en géométrie descriptive,
- la figure 2 représente une configuration de la pièce rigide ou semi-rigide, dans une vue en perspective,
- la figure 3 représente une vue schématique en coupe de la pièce rigide ou semi-rigide montée sur le tambour d'assemblage,
- la figure 4 représente une vue en élévation du tambour et d'un outil d'assemblage,
- la figure 5 représente schématiquement un des modes de réalisation du procédé d'élaboration,
- la figure 6 représente une variante possible du procédé de fabrication,
- la figure 7 présente un sac d'aspirateur élaboré selon l'une des variantes du procédé d'assemblage.

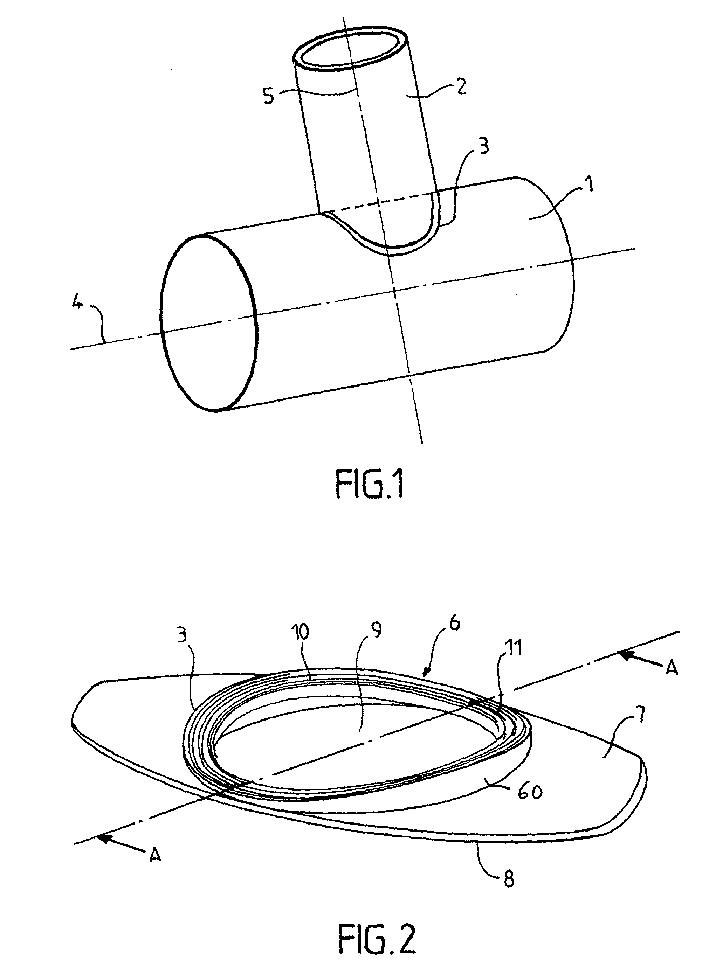

La figure 1 décrit la forme de la face d'assemblage de la pièce rigide ou semi-rigide. Cette forme est assez complexe, en raison de la rigidité de la pièce. Par pièce semi-rigide, on entend ici une pièce qui ne peut se déformer sous de faibles efforts et dont l'amplitude de la déformation élastique sous contrainte est faible. Il est nécessaire, en effet, que cette pièce présente une rigidité conséquente car elle doit assurer des fonctions mécaniques. Par suite, la déformation de ces pièces pour l'opération d'assemblage n'est pas souhaitable car le retour à leur état initial risquerait d'être préjudiciable à la qualité de cet assemblage et complique ladite opération d'assemblage. En particulier, si le procédé d'assemblage est de type collage, il nécessiterait alors de maintenir déformée la pièce pendant un temps dépendant du temps de prise de la colle, ce qui ne rend pas le procédé compatible avec des cadences élevées.

Un des moyens de description de cette face d'assemblage, selon l'exemple présenté, consiste à imaginer l'intersection de la surface périphérique d'un cylindre 1 avec une forme creuse orientée selon un axe sécant à la surface cylindrique du cylindre 1. A titre d'exemple, tel que présenté figure 1, la forme creuse est un deuxième cylindre 2, creux dont l'axe 5 est radial au cylindre 1, donc perpendiculaire notamment à l'axe 4. L'intersection de ce cylindre creux 2 avec le premier aboutit à un contour 3 reprenant la forme de la section du cylindre 2 mais en projection sur un cylindre.

Toute autre forme du contour peut être obtenue par ce même procédé, c'est à dire l'intersection d'une forme creuse et de la surface périphérique du cylindre 1. De même l'orientation de la forme creuse peut être quelconque, et n'est pas obligatoirement radiale au cylindre 1.

Il peut être en effet intéressant, afin de pouvoir agencer à la pièce rigide, lors d'étapes ultérieures, d'autres pièces selon une orientation particulière qui n'est pas radiale au cylindre 1, d'orienter en quelque sorte la face d'assemblage de la pièce rigide selon une direction quelconque.

Ainsi, la forme creuse peut présenter des sections non circulaires, comme des sections polygonales ou elliptique par exemple.

La figure 2 permet de mieux apprécier la forme du contour 3 sur une pièce rigide 7 dans une vue en perspective. La pièce 7 peut être de forme quelconque, selon l'utilisation souhaitée, mais elle possède obligatoirement une face ayant un contour tel que le contour 3, précédemment décrit.

Cette pièce 7 peut, avantageusement, être obtenue par moulage. A titre d'exemple de réalisation, elle comporte une face plane 8 ainsi qu'une forme frontale 60 protubérante de façon perpendiculaire à la face plane 8, tel que le cylindre 2 présenté figure 1. Cette forme frontale protubérante 60 porte donc le contour 3 comme précédemment décrit. Selon l'exemple présente, cette forme frontale est un cylindre, mais il est possible d'envisager une toute autre forme sans sortir du cadre de la présente invention.

De même, comme précédemment expliqué, cette forme frontale peut ne pas être perpendiculaire à la surface plane 8 sans sortir du cadre de la présente invention.

Dans un mode particulier de l'invention, la pièce présente une ouverture 9 délimitée par la face 6 d'assemblage. La forme de la face 6 présente une surface 10 destinée au contact avec la structure souple. Cette surface est ajustée selon le type d'assemblage utilisé et la résistance souhaitée.

Selon une variante de réalisation de l'invention utilisant un procédé à base d'ultrasons pour réaliser l'opération d'assemblage, la surface 10 possède un profil strié, les stries 11 constituant des vecteurs d'énergie pour l'opération de soudage par ultrasons. Ces stries 11 sont fréquemment utilisées dans les procédés de soudage par ultrasons.

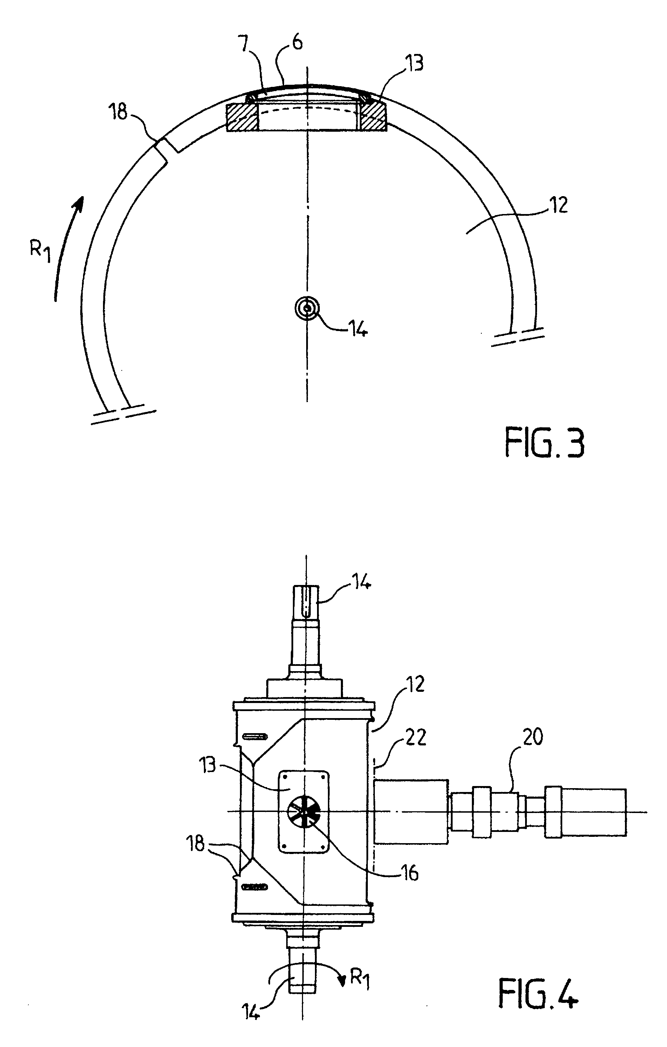

La figure 3 montre la disposition de la pièce rigide 7 sur le tambour d'assemblage 12 dans une vue en coupe où la pièce 7 est représentée selon la coupe A-A de la figure 2.

Sur un tambour 12, un logement 13 permet de recevoir la pièce rigide 7 de telle manière à ce que la face 6 affleure en périphérie du tambour 12. En effet, le contour 3 de la forme frontale protubérante 60 de la pièce rigide est obtenu par l'intersection d'un cylindre creux 2 sur la surface périphérique du tambour 12 d'assemblage. La profondeur du logement 13 est adaptée à l'épaisseur de la pièce rigide ou semi-rigide 7 de telle sorte que le contour 3 tangente la surface périphérique du tambour 12. Cette particularité permet d'amener la structure souple au contact de la surface périphérique du tambour 12 et de la pièce rigide 7 sans déformation de cette structure par la pièce rigide, tout en maintenant la pièce rigide dans son logement. Ceci évite des moyens annexes de maintien de la pièce rigide sur la surface périphérique du tambour et évite d'étirer localement la structure souple.

Le tambour 12 est susceptible de tourner autour de son axe principal 14 selon la rotation R₁ indiquée sur cette figure.

La figure 4 montre le tambour d'assemblage 12 selon une vue en élévation. Un moyeu 14 permet la rotation du tambour 12 selon R₁. On retrouve le logement 13 destiné à recevoir la pièce rigide 7 non représentée ici. Dans une variante de réalisation de la présente invention, le logement 13 comporte des empreintes 16 en forme d'étoile destinées à perforer la structure souple à travers l'ouverture 9 de la pièce rigide 7.

Dans un autre mode de réalisation de l'invention, le tambour dispose de couteaux 18 dont l'utilité sera expliquée dans l'un des paragraphes suivants. Sur cette figure est également représentée une sonotrode 20 destinée à assembler la pièce rigide 7 avec la structure souple par procédé ultrasonique. Cette sonotrode permet la mise en vibration à haute fréquence de sa partie frontale 22, selon un dispositif classique et connu de la technique ultrasonique.

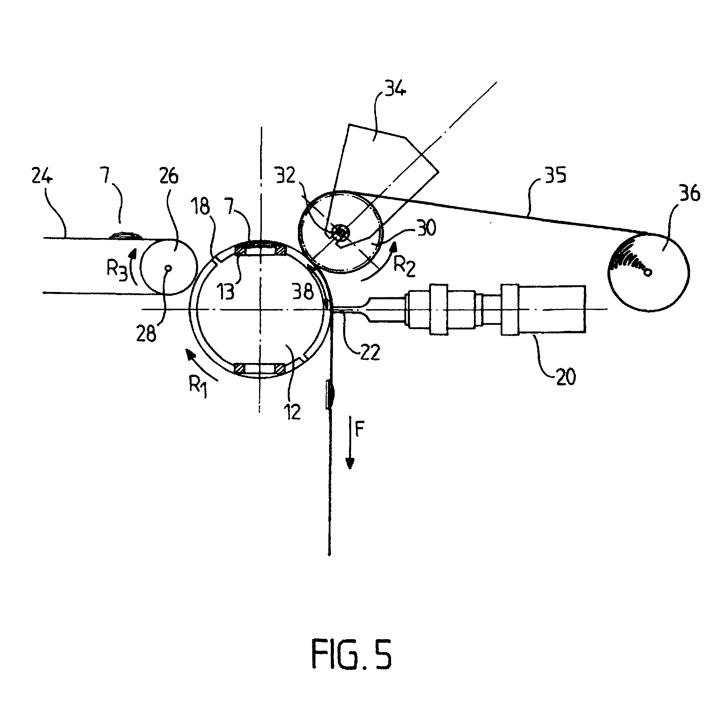

Une des réalisations possibles du procédé d'assemblage est schématiquement décrite figure 5. Les pièces rigides 7 sont amenées par un poste d'alimentation comprenant notamment un tapis 24 d'amenée des pièces 7. Celui-ci est mis en mouvement par rotation du cylindre 26 autour de son axe 28 selon R₃. Une synchronisation entre la venue des pièces 7 et la rotation du tambour 12 est nécessaire et peut être obtenue par des automatismes à base de capteurs, couramment utilisés. Les pièces 7 sont ainsi régulièrement chargées à la volée sur le tambour d'assemblage 12 dans les logements 13. Ces logements sont régulièrement répartis sur la périphérie du cylindre, de manière à réaliser un enchaînement continu d'assemblage des éléments.

Selon le mode de réalisation présenté, deux logements sont ainsi disposés, diamétralement opposés. Un cylindre 30 tournant autour d'un axe 32 selon R₂ supporté par un bras 34 permet l'alimentation de la structure souple 35, initialement enroulée sur un cylindre 36. L'association de la rotation R₁ du tambour d'assemblage 12 ainsi que la rotation R₂ du cylindre 30 permet l'entraînement de la structure souple 35 selon la direction F. Lors de ces rotations, la structure souple 35 recouvre la pièce rigide 7 sur la portion 38 du tambour 12 et permet son maintien lors de la rotation du tambour. La structure souple 35 est assemblée sur la surface 10 de la pièce rigide 7, par le passage de ces deux pièces, lors de la rotation du tambour d'assemblage 12 devant la sonotrode 20, par un procédé ultrasonique.

Le procédé ultrasonique n'est qu'un exemple de réalisation de la présente invention. Tout autre dispositif d'assemblage compatible avec le procédé rotatif utilisé peut être employé sans sortir du cadre de la présente invention. Ainsi, un procédé de collage ou de fusion locale peut être envisagé pour assembler les deux pièces 7 et 35. Les pièces à assembler doivent cependant être compatibles quant au procédé d'assemblage utilisé. Ainsi, pour l'exemple cité, la structure souple 35 et la pièce rigide 7 sont des matériaux à base plastique présentant des points de fusion proches. L'invention n'est pas limitée à ces matériaux, donnés uniquement à titre d'exemples.

Une des caractéristiques de ce procédé rotatif réside dans la possibilité d'une rotation continue du tambour d'assemblage 12. Cette particularité est atteinte par la courbure de la pièce rigide 7 qui permet son assemblage à la structure souple sur le tambour 12, par l'intégration des pièces 7 dans le tambour 12 à l'aide des logements 13, ainsi que par l'assemblage lui-même qui ne nécessite pas un arrêt de la rotation du tambour, que le procédé d'assemblage soit ultrasonique ou de type collage ou fusion classique. La rotation continue du tambour d'assemblage 12 permet d'atteindre des cadences élevées de fabrication des produits, ce qui permet de diminuer les coûts de fabrication.

Les pièces, après leur assemblage par la partie frontale 22 de la sonotrode 20, sont extraites du procédé où elles peuvent notamment être découpées ou subir d'autres traitements. Afin de faciliter les étapes d'élaboration, le tambour 12 possède, avantageusement, des couteaux 18 permettant de couper la pièce selon une forme choisie. Ces couteaux 18 peuvent être de simples outils tranchants qui viendront cisailler le tissu ou des outils chauffants.

Avantageusement, dans le procédé ultrasonique présenté, les couteaux 18 présentent une forme adaptée à la découpe par ultrasons. Il est en effet connu que le procédé ultrasonique permet non seulement de souder des pièces entre elles, mais aussi de les découper. Le tambour d'assemblage 12 peut donc être pourvu de couteaux 18 permettant la découpe des formes.

Ainsi, une des variantes du procédé permet, sur un même tambour, d'assembler une pièce rigide 7 à une structure souple 35 et de découper celle-ci.

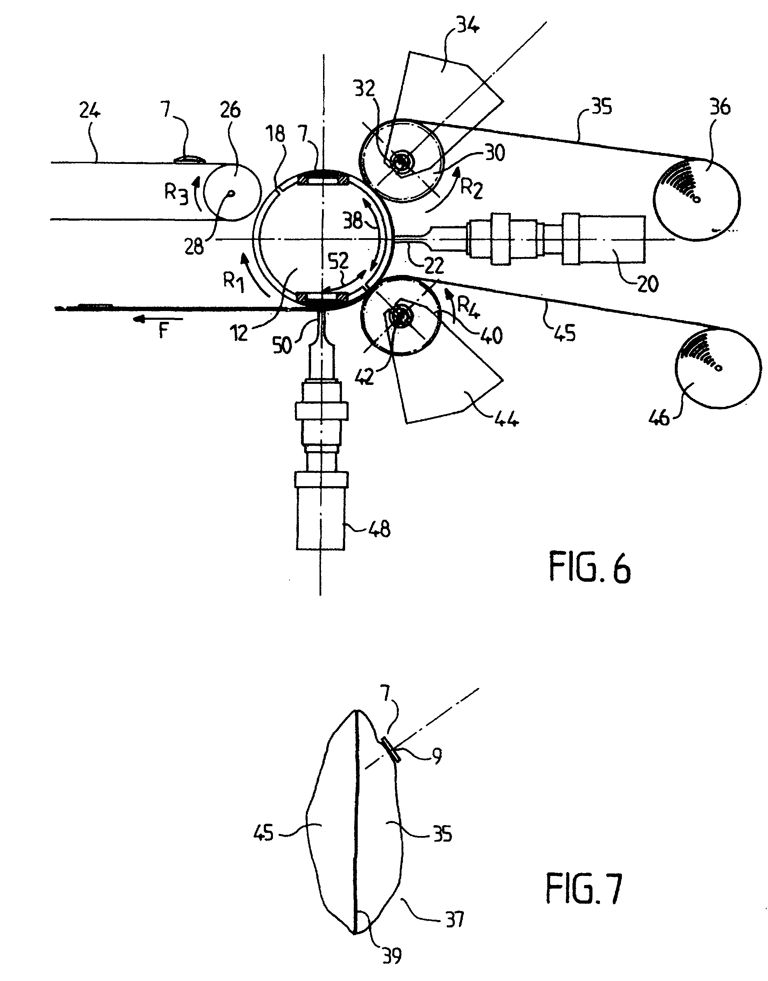

La figure 6 présente notamment un tel dispositif à deux sonotrodes 20, 48, la première réalisant l'assemblage proprement dit, tandis que la seconde découpe la structure souple selon une forme établie. Ce procédé peut être notamment appliqué à la réalisation de filtres, la structure souple présentant alors des propriétés de filtration adaptées à cette utilisation, la partie rigide du filtre constituant, par exemple, un moyen d'accrochage et/ou un renfort mécanique.

Dans une configuration plus élaborée de la présente invention, le procédé dispose d'une deuxième alimentation de structure souple, la sonotrode 48 permettant alors de souder les structures souples entre elles et de les découper selon une forme établie. Ainsi, la structure souple 45, initialement enroulée sur le cylindre 46, est déroulée à l'aide du cylindre 40 tournant autour de l'axe 42 selon R₄. Un bras 44 permet de supporter l'ensemble.

Ce dispositif permet la réalisation de sacs selon le schéma suivant. La pièce rigide 7 est fournie à la volée par le tapis 24 par la rotation du cylindre 26 selon R₃ dans les logements 13 du tambour 12. Une première structure souple 35 est fournie sur le tambour 12 à l'aide du cylindre 30 entraîné en rotation selon R₂. Les deux pièces sont assemblées par l'émission ultrasonique de la partie frontale 22 de la sonotrode 20. Ensuite, une seconde structure souple 45 de même nature ou de nature différente de 35 est fournie à l'aide du cylindre 40 tournant selon R₄. Une sonotrode 48 permet par son extrémité 50 de réaliser, dans le même temps, l'opération de soudage local des deux structures souples l'une sur l'autre ainsi que la découpe finale des deux structures, matérialisant ainsi le contour du sac, à l'aide des couteaux 18 dont la visualisation est plus aisée figure 4.

Avantageusement, la pièce rigide 7 possède une ouverture 9. Lors de l'assemblage de la première structure souple 35 sur la pièce rigide 7, une découpe a lieu à l'intérieur de l'ouverture 9 à l'aide des empreintes 16. Cette découpe peut être effectuée à l'aide d'un élément emporte-pièce, mais le procédé ultrasonique permet de réaliser, avec le même outil l'opération de soudage et de découpe. Ainsi, la sonotrode 20 permet de souder la structure souple 35 sur la pièce rigide 7 tout en réalisant une découpe de cette structure à travers l'ouverture 9 de la pièce rigide 7. Le procédé ainsi décrit permet de réaliser des sacs, composés de deux structures souples 35, 45 soudées l'une à l'autre sur les bords et comprenant une pièce rigide pouvant être pourvue d'un orifice dont la structure souple sous-jacente est perforée.

Cette configuration est particulièrement adaptée aux sacs d'aspirateur qui nécessitent une zone de stockage ainsi qu'une liaison entre l'intérieur du sac et l'extérieur, les structures souples présentant alors les caractéristiques de filtration propres aux sacs d'aspirateurs.

La figure 7 présente un tel sac 37, partiellement et virtuellement gonflé dans une vue de profil, pour une meilleure visualisation. La zone d'assemblage 39 entre les deux structures souples 35, 45 permet de limiter un volume intérieur dont l'accès est rendu possible par l'ouverture 9 ménagée dans la pièce rigide 7 assemblée à la structure 35, ainsi que par la perforation de la partie sous-jacente à cette ouverture de la structure souple 35 selon le motif des empreintes 16.

Un tel sac, réalisé selon l'invention présente l'avantage de pouvoir être relié à une tubulure par l'ouverture 9. La forme frontale protubérante 60 étant cylindrique, il peut être envisagé une connexion présentant une très bonne étanchéité uniquement à l'aide d'une tubulure de section circulaire et dont le diamètre extérieur est légèrement inférieur au diamètre intérieur de la forme frontale protubérante 60.

La structure souple utilisée 35, 45 peut elle-même être composée de plusieurs structures souples afin de présenter des caractéristiques physiques particulières.

## Revendications

1. Procédé d'assemblage d'une pièce rigide ou semi-rigide (7) sur au moins une structure souple (35), les éléments à assembler (7, 35) étant entraînés sur la surface périphérique d'un tambour (12) où ils sont assemblés, **caractérisé en ce que** la face frontale d'assemblage (6) de la pièce rigide ou semi-rigide (7) correspond à la surface générée par l'intersection entre d'une part la surface périphérique du tambour (12) et d'autre part la forme frontale protubérante (60) de la pièce rigide ou semi-rigide, et **en ce que** ladite pièce est disposée dans un logement (13) ménagé par un évidement partiel de la surface périphérique du tambour (12).

2. Procédé d'assemblage selon la revendication 1, caractérisé en ce la face frontale d'assemblage (6) de la pièce rigide ou semi-rigide (7) correspond à la surface générée par l'intersection entre d'une part la surface périphérique du tambour (12) et d'autre part la forme frontale protubérante (60) de la pièce rigide ou semi-rigide, selon un axe radial du tambour (12).

3. Procédé d'assemblage selon l'une des revendications précédentes, **caractérisé en ce que** les éléments à assembler (7, 35) sont entraînés et assemblés lors d'une rotation continue du tambour (12).

4. Procédé d'assemblage selon l'une des revendications précédentes, **caractérisé en ce que** d'autres opérations que l'opération d'assemblage sont réalisées sur le tambour (12).

5. Procédé d'assemblage selon l'une des revendications précédentes, **caractérisé en ce que** le tambour (12) comporte aussi des moyens de découpe (16, 18) de la structure souple ou des structures souples (35).

6. Procédé d'assemblage selon l'une des revendications précédentes, **caractérisé en ce que** la pièce rigide ou semi-rigide (7) comportant une ouverture (9), lors de l'opération d'assemblage, une découpe de la structure souple ou des structures souples (35) est réalisée à travers l'ouverture (9) de la pièce rigide ou semi-rigide (7).

7. Procédé d'assemblage selon l'une des revendications précédentes, **caractérisé en ce que** le procédé d'assemblage est un procédé de soudage par ultrasons.

8. Procédé d'assemblage selon la revendication précédente, **caractérisé en ce que** le contour de la pièce rigide ou semi-rigide (7) porte des stries (11) afin de réaliser des vecteurs d'énergie pour l'opération d'assemblage par ultrasons.

9. Filtre d'aspirateur dont le procédé de fabrication est conforme à l'une des revendications 1 à 8.

10. Procédé d'assemblage comportant plusieurs étapes de fabrication, parmi lesquelles les séquences suivantes:
- assemblage d'au moins une structure souple (35) à une pièce rigide ou semi-rigide (7), comportant une ouverture (9),
- découpe d'au moins une structure souple (35) à travers l'ouverture (9) de la pièce rigide ou semi-rigide (7),
- assemblage d'au moins une autre structure souple (45) sur la ou les structure(s) précédente(s) (35) avec découpage de ces structures (35, 45) selon une forme choisie, de manière à réaliser un sac souple comportant une pièce rigide ainsi qu'un orifice de liaison (7) entre l'intérieur du sac et l'extérieur, lesdites séquences étant **caractérisées par le fait qu'**elles sont réalisées sur la surface courbe d'un unique tambour (12) mis en rotation, la face frontale d'assemblage (6) de la pièce rigide ou semi-rigide (7) correspondant à la surface générée par l'intersection entre d'une part la surface périphérique du tambour (12) et d'autre part la forme frontale protubérante (60) de la pièce rigide ou semi-rigide.

11. Sac d'aspirateur (37) dont le procédé de fabrication est conforme à l'une des revendications 1 à 8 ou 10.

## Patentansprüche

1. Verfahren zum Zusammenfügen eines starren oder halbstarren Stücks (7) mit mindestens einer nachgiebigen Struktur (35), wobei die zusammenzurügenden Elemente (7, 35) auf der Umfangsfläche einer Walze (12) mitgenommen werden, auf der sie zusammengefügt werden, **dadurch gekennzeichnet, daß** die Zusammenfügungsvorderseite (6) des starren oder halbstarren Stücks (7) der Fläche entspricht, die durch den Schnitt zwischen einerseits der Umfangsfläche der Walze (12) und andererseits der vorspringenden vorderen Form (60) des starren oder halbstarren Stücks erzeugt wird, und daß das Stück in einer Aufnahme (13) angeordnet wird, die durch eine teilweise Aussparung der Umfangsfläche der Walze (12) ausgebildet ist.

2. Verfahren zum Zusammenfügen nach Anspruch 1, **dadurch gekennzeichnet, daß** die Zusammenfügungsvorderseite (6) des starren oder halbstarren Stücks (7) der Fläche entspricht, die durch den Schnitt zwischen einerseits der Umfangsfläche der Walze (12) und andererseits der vorspringenden vorderen Form (60) des starren oder halbstarren Stücks entlang einer radialen Achse der Walze (12) erzeugt wird.

3. Verfahren zum Zusammenfügen nach einem der vorangehenden Ansprüche, **dadurch gekennzeichnet, daß** die zusammenzufügenden Elemente (7, 35) bei einer ununterbrochenen Rotation der Walze (12) mitgenommen und zusammengefügt werden.

4. Verfahren zum Zusammenfügen nach einem der vorangehenden Ansprüche, **dadurch gekennzeichnet, daß** auf der Walze (12) andere Vorgänge als der Vorgang zum Zusammenfügen ausgeführt werden.

5. Verfahren zum Zusammenfügen nach einem der vorangehenden Ansprüche, **dadurch gekennzeichnet, daß** die Walze (12) auch Mittel zum Ausschneiden (16, 18) der nachgiebigen Struktur oder der nachgiebigen Strukturen (35) aufweist.

6. Verfahren zum Zusammenfügen nach einem der vorangehenden Ansprüche, **dadurch gekennzeichnet, daß**, da das starre oder halbstarre Stück (7) eine Öffnung (9) aufweist, bei dem Vorgang zum Zusammenfügen ein Ausschneiden der nachgiebigen Struktur oder der nachgiebigen Strukturen (35) durch die Öffnung (9) des starren oder halbstarren Stücks (7) hindurch ausgeführt wird.

7. Verfahren zum Zusammenfügen nach einem der vorangehenden Ansprüche, **dadurch gekennzeichnet, daß** das Verfahren zum Zusammenfügen ein Verfahren zum Ultraschallschweißen ist.

8. Verfahren zum Zusammenfügen nach dem vorangehenden Anspruch, **dadurch gekennzeichnet, daß** die Kontur des starren oder halbstarren Stücks (7) Rillen (11) trägt, um Energievektoren für den Vorgang zum Zusammenfügen durch Ultraschall auszuführen.

9. Staubsaugerfilter, dessen Herstellungsverfahren einem der Ansprüche 1 bis 8 entspricht.

10. Verfahren zum Zusammenfügen mit mehreren Herstellungsschritten, unter denen sich die folgenden Sequenzen befinden:
- Zusammenfügen von mindestens einer nachgiebigen Struktur (35) mit einem starren oder halbstarren Stück (7) mit einer Öffnung (9),
- Ausschneiden von mindestens einer nachgiebigen Struktur (35) durch die Öffnung (9) des starren oder halbstarren Stücks (7) hindurch,
- Zusammenfügen von mindestens einer anderen nachgiebigen Struktur (45) mit der oder den vorangehenden Struktur(en) (35) mit Ausschneiden dieser Strukturen (35, 45) gemäß einer gewählten Form, um einen nachgiebigen Beutel mit einem starren Stück sowie einer Öffnung (7) zur Verbindung zwischen dem Inneren des Beutels und dem Äußeren auszuführen, wobei die Sequenzen durch die Tatsache gekennzeichnet sind, daß sie auf der gekrümmten Oberfläche einer einzigen in Rotation versetzten Walze (12) ausgeführt werden, wobei die Zusammenfügungsvorderseite (6) des starren oder halbstarren Stücks (7) der Fläche entspricht, die durch die Schnittstelle zwischen einerseits der Umfangsfläche der Walze (12) und andererseits der vorspringenden vorderen Form (60) des starren oder halbstarren Stücks erzeugt wird.

11. Staubsaugerbeutel (37), dessen Herstellungsverfahren einem der Ansprüche 1 bis 8 oder 10 entspricht.

## Claims

1. A method of assembling a rigid or semi-rigid part (7) to at least one flexible structure (35), the elements to be assembled together (7, 35) being driven onto the peripheral surface of a drum (12), on which they are assembled together, said method being **characterized in that** the assembly front face (6) of the rigid or semi-rigid part (7) corresponds to the surface generated by the intersection between the peripheral surface of the drum (12) and the projecting front shape (60) of the rigid or semi-rigid part, and **in that** said part is disposed in a recess (13) provided locally in the peripheral surface of the drum (12).

2. An assembly method according to claim 1, **characterized in that** the assembly front face (6) of the rigid or semi-rigid part (7) corresponds to the surface generated by the intersection between the peripheral surface of the drum (12) and the front shape (60) of the rigid or semi-rigid part projecting along a radial axis of the drum (12).

3. An assembly method according to any preceding claim, **characterized in that** the elements (7, 35) to be assembled together are driven and assembled together while the drum (12) is rotating continuously.

4. An assembly method according to any preceding claim, **characterized in that** operations other than the assembly operation are performed on the drum (12).

5. An assembly method according to any preceding claim, **characterized in that** the drum (12) is also provided with cutting means (16, 18) for cutting the flexible structure or the flexible structures (35).

6. An assembly method according to any preceding claim, **characterized in that** with the rigid or semi-rigid part (7) being provided with an opening (9), the flexible structure or the flexible structures (35) are cut through the opening (9) in the rigid or semi-rigid part (7) during the assembly operation.

7. An assembly method according to any preceding claim, **characterized in that** the assembly method is an ultrasonic sealing method.

8. An assembly method according to the preceding claim, **characterized in that** the outline of the rigid or semi-rigid part (7) carries grooves (11) serving to form energy vectors for the ultrasonic assembly operation.

9. A vacuum cleaner filter which is manufactured using a method according to any one of claims 1 to 8.

10. An assembly method comprising a plurality of manufacturing steps, including the following sequences:
assembling at least one flexible structure (35) to a rigid or semi-rigid part (7) that is provided with an opening (9);
cutting at least one flexible structure (35) through the opening (9) in the rigid or semi-rigid part (7); and
assembling at least one other flexible structure (45) to the preceding structure(s) (35) with the structures (35, 45) being cut to a chosen shape, so as to form a flexible bag having a rigid part and an orifice (7) for communicating between the inside and the outside of the bag, said sequences being **characterized by** the fact that they are performed on the curved surface of a single drum (12) that is rotating, the assembly front face (6) of the rigid or semi-rigid part (7) corresponding to the surface generated by the intersection between the peripheral surface of the drum (12) and the projecting front shape (60) of the rigid or semi-rigid part.

11. A vacuum cleaner bag (37) which is manufactured using a method according to any one of claims 1 to 8, or claim 10.
